# EUROPÄISCHE PATENTSCHRIFT

(11) **EP 2 631 050 B1**
(45) Veröffentlichungstag und Bekanntmachung des Hinweises auf die Patenterteilung: **27.07.2016**
(21) Anmeldenummer: 12001195.2
(22) Anmeldetag: 22.02.2012
(51) Int. Cl.: B29B 11/16, B29C 70/20, B29C 65/50, B29D 30/38, B29D 30/42, B29D 30/46, B29C 65/08, B29C 65/10, B29C 65/16, B29C 65/14

(54) **Verfahren und Vorrichtung zum Erzeugen eines Verbundwerkstoffs**
Method and device for creating a composite material
Procédé et dispositif destinés à produire une matière première composite

(43) Veröffentlichungstag der Anmeldung: 28.08.2013
(73) Patentinhaber: KARL MAYER Technische Textilien GmbH, 09117 Chemnitz (DE)
(72) Erfinder: Glöckner, René, 09575 Eppendorf (DE); Pander, Lutz, 09113 Chemnitz (DE); Grünert, Jan, 09112 Chemnitz (DE)
(74) Vertreter: Knoblauch, Andreas

(56) Entgegenhaltungen:
- EP-A1- 2 663 450
- EP-A2- 1 719 609
- AT-B- 397 062
- FR-A- 1 362 190
- FR-A1- 2 761 380
- JP-A- S6 297 834
- US-A- 4 875 959
- US-A1- 2009 301 642

## Beschreibung

Die Erfindung betrifft ein Verfahren zum Erzeugen eines Verbundwerkstoffs.

Ferner betrifft die Erfindung eine Vorrichtung zum Erzeugen eines Verbundwerkstoffs.

In vielen Bereichen der Technik werden Bauteile aus faserverstärktem Kunststoff verwendet. Bauteile aus faserverstärktem Kunststoff haben gegenüber Bauteilen aus Metall den Vorteil höherer spezifischer mechanischer Eigenschaften. Darüber hinaus können Kunststoffe auch in Bereichen eingesetzt werden, wo Metalle korrodieren würden.

EP 2 301 735 A2 zeigt ein Halbzeug und einen Halbzeugverbund sowie Herstellungsverfahren für dieses Halbzeug. Dabei werden unidirektional gerichtet festgelegte Fasern zwischen zwei Lagen aus thermoplastischem Kunststoff angeordnet. Dieser Verbund bildet dann eine Art "Blech", das man ähnlich wie ein Metallblech umformen kann. Dieses Halbzeug hat in der Richtung, in der sich die Fasern erstrecken, eine relativ hohe Zugfestigkeit. In eine Richtung quer zur Längserstreckung der Fasern ist die Zugfestigkeit deutlich geringer. Um die Zugfestigkeit zu erhöhen, ordnet man mehrere derartige Halbzeuge übereinander an, wobei sich die Winkellagen der Fasern voneinander unterscheiden.

Eine andere Möglichkeit, ein Halbzeug mit einer erhöhten Zugfestigkeit in mehreren Richtungen zu erzeugen, besteht in der Herstellung eines so genannten Multiaxial-Geleges. Hier verwendet man mehrere Fadenscharen, die aufeinander gelegt werden. In jeder Fadenschar sind die Fäden unidirektional angeordnet. Die Richtungen der Fäden unterscheiden sich dann zwischen den Fadenscharen.

In beiden Fällen erfordert die Herstellung eines Verbundwerkstoffs oder eines Multiaxial-Geleges einen erheblichen Aufwand. Wenn die Fäden oder Fasern unterschiedliche Richtungen haben sollen, müssen die Fadenscharen oder Halbzeuge auch aus unterschiedlichen Richtungen zugeführt werden. Dies erfordert einen relativ großen Bauraum und in der Regel auch eine relativ komplizierte Steuerung, weil die einzelnen Lieferwerke aufeinander abgestimmt werden müssen.

EP 1 719 609 A2 zeigt ein Verfahren und eine Vorrichtung zum Erzeugen einer Verbundbahn auf der Basis von mindestens zwei Bahnen. Hierzu werden zwei Bahnen parallel zueinander einer Positionierungszone zugeführt. Die beiden Bahnen liegen dabei nebeneinander. Eine weitere Bahn wird unter einem rechten Winkel zu den beiden erstgenannten Bahnen zugeführt, wobei allerdings vor Erreichen der Positionierzone Segmente von dieser Bahn abgeschnitten werden müssen. Die Länge dieser Segmente entspricht der Summe der Breiten der beiden Bahnen. Die Segmente und die Bahnen werden dann miteinander verbunden, so dass eine Verbundbahn entsteht, die auf einer Rolle aufgewickelt werden kann.

US 2009/0301642 A1 zeigt eine ähnliche Vorgehensweise. Hier wird eine erste Halbzeug-Bahn quer zu einer zweiten Halbzeug-Bahn zugeführt. Die erste Halbzeug-Bahn weist Verstärkungsfasern auf, die parallel zur Längsrichtung der Halbzeug-Bahn verlaufen, also einen Winkel von 0° einschließen. Die Halbzeug-Bahn weist Fasern auf, die ebenfalls einen Winkel von 0° mit der Längsrichtung der Halbzeug-Bahn einschließen. Durch das Zusammensetzen der beiden Halbzeug-Bahnen wird ein Verbundwerkstoff erzeugt.

In FR 2 761 380 A1 wird ein Multiaxialgelege erzeugt, indem UD-Bahnen unter unterschiedlichen Winkeln (0°, plus 60°, minus 60°) aufeinander gelegt werden.

US 4 875 959 A beschreibt ein Verfahren und eine Vorrichtung zum Herstellen eines Reifens. Hier werden Elemente eines Felgenbandes aufeinander gelegt und auf einer Trommel miteinander verbunden.

FR 1 362 190 A zeigt die Herstellung von Hüllen für pneumatische Bänder aus einzelnen Stücken, die zu einem Ring geformt werden.

WO 2012/096696 A1 (Stand der Technik nach Artikel 54 (3) EPÜ) zeigt einen Verbundwerkstoff sowie ein Verfahren und eine Vorrichtung zu seiner Herstellung. Der Verbundwerkstoff wird aus Modulen zusammengesetzt, von denen jedes mindestens zwei Lagen mit unterschiedlich ausgerichteten Fasern aufweist.

US 4 708 761 A beschreibt eine Vorrichtung zum Laminieren von Prepreg-Materialien. Diese Materialien werden von Rollen abgewickelt, die nebeneinander angeordnet sind. Die Prepreg-Materialien werden auf einen Auflagetisch gezogen, der seitlich verfahrbar ist, so dass dieser Auflagetisch vor jeder Rolle positioniert werden kann. Die Bahnen, die von den Rollen abgezogen worden sind, werden auf dem Auflagetisch ablegt und dann aufeinander laminiert. Bei den Bahnen handelt es sich entweder um einlagige Bahnen mit einer Faserrichtung von 0° oder um mehrlagige Bahnen, bei denen eine Lage eine Faserrichtung von 0° und andere Lagen abweichende Faserrichtungen haben.

AT 397 062 B zeigt ein Verfahren zur Herstellung von Formkörpern aus einer Mehrzahl orientierter Kunststofffolien und einer Anlage zur Durchführung des Verfahrens. Hier werden Formkörper aus einer Mehrzahl übereinander gelegter und miteinander verpresster orientierter Kunststofffolien hergestellt.

Der Erfindung liegt die Aufgabe zugrunde, die Herstellung von multiaxial verstärkten Werkstoffen zu erleichtern.

Die Aufgabe wird durch ein Verfahren zum Erzeugen eines Verbundwerkstoffs mit den Merkmalen des Anspruchs 1 gelöst.

Da die Halbzeug-Bahnen jeweils in ihrer Längsrichtung zugeführt werden können, ist vergleichsweise wenig Bauraum erforderlich. Auch die Steuerung der Zufuhr der Bahnen kann einfach gestaltet werden, weil man keine komplizierten Umrechnungen vornehmen muss, bei der die Winkel von zugeführten Fasern oder Fadenscharen berücksichtigt werden müssen.

Mindestens zwei Halbzeug-Bahnen weisen unterschiedliche vorbestimmte Winkel auf. Wenn man mehr als zwei Halbzeug-Bahnen verwendet, können natürlich zwei dieser Halbzeug-Bahnen auch die gleichen Winkel aufweisen. Die Winkel von mindestens zwei Halbzeug-Bahnen unterscheiden sich jedoch, so dass man in mindestens zwei Richtungen eine erhöhte Zugfestigkeit realisieren kann.

Vorzugsweise verbindet man die Halbzeug-Bahnen unter Temperatureinwirkung miteinander. Das Aufbringen einer erhöhten Temperatur ist in der Regel problemlos möglich.

Die Temperaturerhöhung kann beispielsweise die Oberfläche mindestens einer Halbzeug-Bahn soweit erweichen, dass sie klebrig wird und an einer anderen Halbzeug-Bahn anhaftet.

Vorzugsweise nimmt man bei mehr als zwei Halbzeug-Bahnen eine Verbindung zwischen zwei benachbarten Halbzeug-Bahnen vor, bevor eine weitere Halbzeug-Bahn hinzugefügt wird. Wenn man beispielsweise eine erste Halbzeug-Bahn und eine zweite Halbzeug-Bahn aufeinander legt, dann kann man diese beiden Halbzeug-Bahnen miteinander verbinden, bevor eine dritte Halbzeug-Bahn auf die zweite Halbzeug-Bahn aufgelegt wird. Die dritte Halbzeug-Bahn wird dann mit der zweiten Halbzeug-Bahn verbunden, bevor die vierte Halbzeug-Bahn aufgelegt wird und so weiter. Insbesondere bei der Verbindung der Halbzeug-Bahnen unter Wärmezufuhr hat dies erhebliche Vorteile, weil die Wärme jeweils nur eine Halbzeug-Bahn durchdringen muss.

Alternativ dazu kann man vorsehen, dass man mindestens drei Halbzeug-Bahnen fächerartig zusammenführt und die Halbzeug-Bahnen gleichzeitig miteinander verbindet. Hierbei sind in den Zwischenräumen zwischen den Halbzeug-Bahnen Verbindungshilfsmittel angeordnet. Selbstverständlich kann man auch mehr als die drei genannten Halbzeug-Bahnen gleichzeitig miteinander verbinden. Eine derartige Ausgestaltung schafft eine sehr homogene Struktur des Verbundwerkstoffs in Dickenrichtung. Die Verbindungshilfsmittel bereiten die Oberflächen der Halbzeug-Bahnen jeweils so vor, dass sie mit den benachbarten Halbzeug-Bahnen verbunden werden können.

Man wickelt die Halbzeug-Bahnen von Rollen ab, deren Rotationsachsen parallel zueinander ausgerichtet sind. Man kann dann diese Rollen in Längsrichtung hintereinander anordnen. Zum Herstellen des Verbundwerkstoffs ist es dann lediglich erforderlich, die Halbzeug-Bahnen von den Rollen abzuwickeln oder abzuziehen. In vielen Fällen ist hierfür noch nicht einmal ein Antrieb der Rollen erforderlich. Die Steuerung wird dadurch relativ einfach gehalten.

Bevorzugterweise verbindet man benachbarte Halbzeug-Bahnen stoffschlüssig miteinander. Bei einer stoffschlüssigen Verbindung werden die Halbzeug-Bahnen beispielsweise miteinander verschweißt oder verklebt. Das Verkleben kann dadurch bewerkstelligt werden, dass man einen Klebstoff zwischen den benachbarten Halbzeug-Bahnen einbringt, der dann die beiden benachbarten Halbzeug-Bahnen miteinander verbindet. Man kann auch ein Lösungsmittel einbringen, das die Oberfläche mindestens einer Halbzeug-Bahn so anlöst, dass sie sich mit der Oberfläche der benachbarten Halbzeug-Bahn verbindet. Die Art der Verbindung richtet sich natürlich nach dem Kunststoff- oder Matrixmaterial der verwendeten Halbzeug-Bahnen.

Vorzugsweise verbindet man die Halbzeug-Bahnen unter Druckeinwirkung miteinander. Vielfach ergibt sich unter einem erhöhten Druck eine verbesserte Verbindung zwischen benachbarten Halbzeug-Bahnen. Die Druckeinwirkung kann gleichzeitig dazu verwendet werden, den Verbundwerkstoff zu kalibrieren.

Die Aufgabe wird auch durch eine Vorrichtung zum Erzeugen eines Verbundwerkstoffs mit den Merkmalen des Anspruchs 7 gelöst.

Durch Verwendung von Halbzeug-Bahnen mit entsprechend ausgerichteten Faserrichtungen kann man einen Verbundwerkstoff erzeugen, der im Hinblick auf seine Zugfestigkeit relativ genau auf die Anforderungen hin gestaltet werden kann.

Mindestens zwei der Halbzeug-Bahnen weisen unterschiedliche vorbestimmte Winkel auf. Mit einer derartigen Vorrichtung lässt sich ein Verbundwerkstoff erzeugen, der mindestens zwei Faserlagen mit unterschiedlichen Winkeln zur Längsrichtung aufweist. Dementsprechend weist dieser Verbundwerkstoff in die beiden Richtungen der Faserlagen eine erhöhte Zugfestigkeit auf.

Mindestens eine Ausgabeeinrichtung weist eine Vorratsrolle auf. Die Halbzeug-Bahn kann dann von dieser Vorratsrolle abgewickelt werden. Dies erleichtert die Vorratshaltung.

Mindestens zwei Ausgabeeinrichtungen weisen jeweils eine Vorratsrolle auf und die Achsen der Vorratsrollen sind parallel zueinander ausgerichtet. Man kann dann diese Rollen in Längsrichtung hintereinander oder übereinander anordnen. Zum Herstellen des Verbundwerkstoffs ist es dann lediglich erforderlich, die Halbzeug-Bahnen von den Vorratsrollen abzuwickeln oder abzuziehen. Eine Umlenkung ist nicht unbedingt erforderlich.

Vorzugsweise weist die Verbindungsvorrichtung eine Wärmequelle auf. Die Wärmequelle kann verwendet werden, um die Temperatur von mindestens einer Halbzeug-Bahn zu erhöhen. In Abhängigkeit von der gewünschten Verbindung zwischen benachbarten Halbzeug-Bahnen kann die Temperatur dann so hoch gemacht werden, dass benachbarte Halbzeug-Bahnen miteinander verschweißen.

Alternativ oder zusätzlich kann vorgesehen sein, dass die Verbindungsvorrichtung einen Spender für Klebstoff und/oder Lösemittel aufweist. Der Klebstoff kann dann verwendet werden, um benachbarte Halbzeug-Bahnen miteinander zu verkleben. Wenn ein Lösemittel verwendet wird, das die Oberfläche der Halbzeug-Bahn anlöst, dann kann man dieses Lösemittel auftragen und die dann angelösten Oberflächen miteinander verbinden. Manche Klebstoffe kleben auch besser, wenn die gegenüberliegende Oberfläche mit einem Lösemittel vorbehandelt worden ist. Manche Klebstoffe kleben auch besser oder schneller, wenn Wärme zugeführt wird.

Vorzugsweise ist eine Andruckeinrichtung vorgesehen, die mindestens zwei Halbzeug-Bahnen zum Verbinden aufeinander presst. Ein erhöhter Druck führt in der Regel zu einem verbesserten Klebe-Verbund.

Hierbei wird bevorzugt, dass die Andruckeinrichtung mindestens ein Rollenpaar aufweist. Das Rollenpaar bildet dann einen Nip, durch den der Verbundwerkstoff, d.h. der Stapel aus mindestens zwei Halbzeug-Bahnen, geleitet wird.

Die Erfindung wird im Folgenden anhand eines bevorzugten Ausführungsbeispiels in Verbindung mit einer Zeichnung beschrieben. Hierin zeigen:
- Fig. 1: eine schematische Darstellung zur Erläuterung der Herstellung einer Halbzeug-Bahn,
- Fig. 2: eine schematische Darstellung einer Vorrichtung zur Erzeugung eines Verbundwerkstoffs und

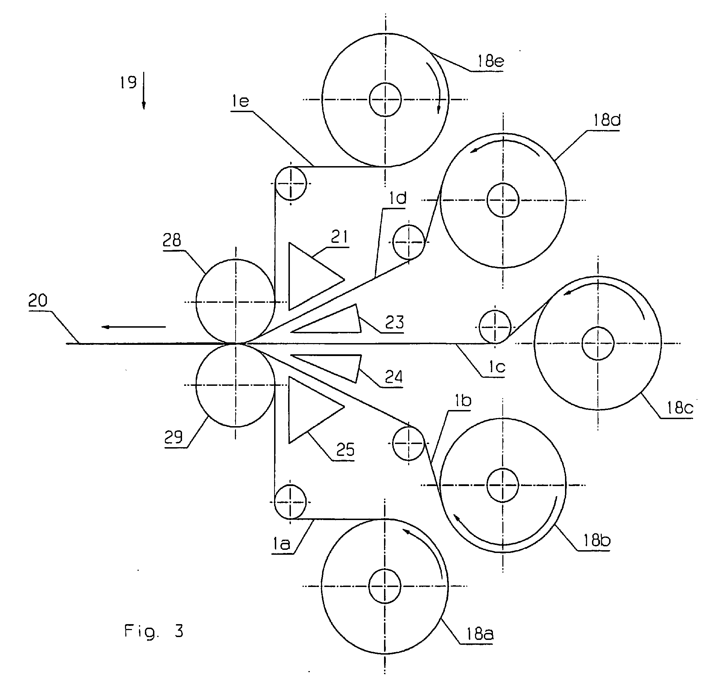

- Fig. 3: eine schematische Darstellung einer abgewandelten Vorrichtung zur Erzeugung eines Verbundwerkstoffs.

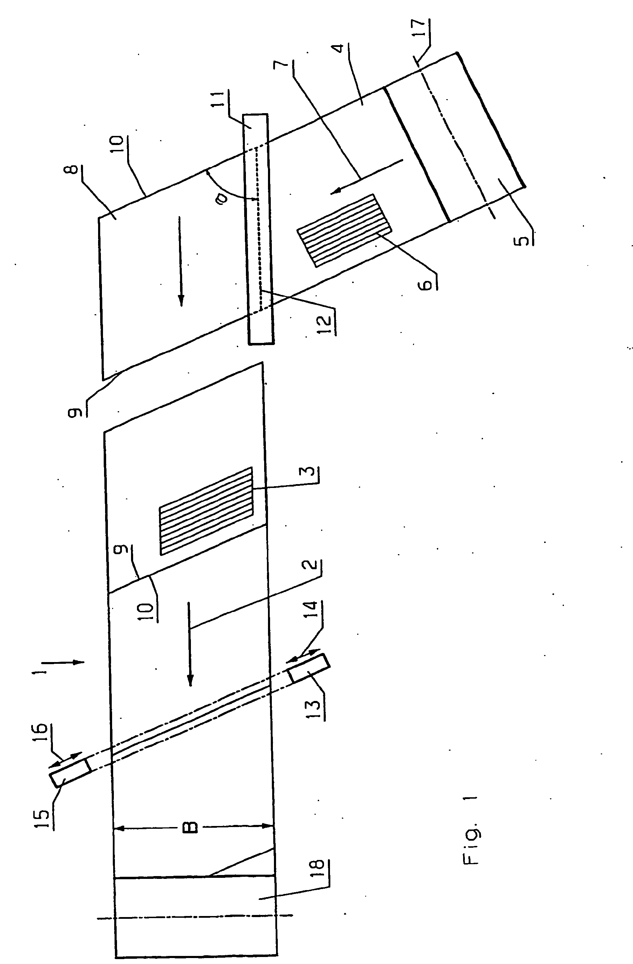

Fig. 1 zeigt in stark schematisierter Form eine Halbzeug-Bahn 1, die eine durch einen Pfeil symbolisierte Längsrichtung 2 und eine Vielzahl von unidirektional gerichtet festgelegten Fasern 3 aufweist. Die Fasern 3 verlaufen unter einem vorbestimmten Winkel a zur Längsrichtung 2.

Sie sind in eine nicht näher dargestellte Matrix aus Kunststoff eingebettet.

Um diese Halbzeug-Bahn herzustellen, wird eine Vorratsbahn 4 verwendet. Die Vorratsbahn 4 kann beispielsweise von einer Vorratsrolle 5 abgewickelt werden. Gegebenenfalls kann man auch mehrere Vorratsrollen 5 nebeneinander anordnen und entsprechend mehrere Vorratsbahnen 4 gleichzeitig abziehen. Die Vorratsbahn 4 kann aber auch online erzeugt werden. Die Vorratsbahn 4 kann, gegebenenfalls bereits in Form von Segmenten, auch aus einem Speicher oder Magazin entnommen werden.

Als Vorratsbahn ist beispielsweise die Bahn eines Halbzeugs verwendbar, das in EP 2 301 735 A2 beschrieben ist. So kann die Vorratsbahn 4 eine Vielzahl von unidirektional gerichtet festgelegten Fasern 6 aufweisen, die zwischen zwei Lagen aus thermoplastischem Kunststoff angeordnet sind. Ein anderer Aufbau ist natürlich denkbar. Die Vorratsbahn 4 weist aber eine Matrix aus einem Kunststoff auf, der die Fasern 6 in ihrer unidirektional gerichteten Ausrichtung festhält.

Die Vorratsbahn 4 weist eine durch einen Pfeil gekennzeichnete Hauptrichtung 7 auf. Die Hauptrichtung 7 ist die "Längsrichtung" der Vorratsbahn 4. Der Begriff "Hauptrichtung" wird zu Unterscheidungszwecken verwendet. Die Fasern 6 sind in Richtung der Hauptrichtung 7 ausgerichtet, d.h. sie verlaufen parallel zur Hauptrichtung 7, wobei der Begriff "parallel" nicht im mathematisch strengen Sinne zu verstehen ist.

Wie aus Fig. 1 zu erkennen ist, werden von der Vorratsbahn 4 Segmente 8 abgetrennt. Jedes Segment weist zwei Längskanten 9, 10 auf. Diese Längskanten sind parallel zur Hauptrichtung und somit parallel zu den Fasern 6 gerichtet. Die Längskanten stehen unter dem vorbestimmten Winkel a zur Längsrichtung 2.

Zum Abtrennen der Segmente 8 wird eine Trenneinrichtung 11 verwendet. Diese Trenneinrichtung durchtrennt die Vorratsbahn 4, beispielsweise mit Hilfe von Ultraschall, mit einem Messer, mit einer Schere, mit einem Bandmesser oder mit einem Fallmesser oder einer Guillotine. Die Trenneinrichtung 11 erzeugt dabei eine Trennlinie 12, die parallel zur Längsrichtung 2 gerichtet ist. Die Vorratsbahn 4 wird unter dem Winkel a zur Längsrichtung 2 zugeführt.

Die Trenneinrichtung 11 trennt die Segmente 8 mit einer Länge ihrer Längskanten 9, 10 ab, die einer Breite B der Halbzeug-Bahn dividiert durch den Kosinus des Winkels a entspricht. Die Längskanten 9, 10 sind also länger als die Breite B der Halbzeug-Bahn 1. Sie sind aber genau so groß, dass man die Segmente 8 später zu der Halbzeug-Bahn mit der gewünschten Breite B zusammensetzen kann.

Da die Trennlinie 12 parallel zur Längsrichtung 2 liegt, ist eine Richtungsänderung der Segmente 8 vor dem Zusammenfügen zu der Halbzeug-Bahn 1 nicht weiter erforderlich.

Man kann die Segmente 8 natürlich auch aus einem Magazin oder einem Speicher entnehmen, in dem sie zuvor abgelegt worden sind.

Die Segmente 8 werden eines nach dem anderen auf einer nicht näher dargestellten Fördereinrichtung abgelegt und in Längsrichtung 2 befördert. Sobald genügend Platz zur Verfügung steht, wird das nächste Segment 8 auf der Fördereinrichtung abgelegt. Die Darstellung in Fig. 1 zeigt das Segment 8 getrennt von der Halbzeug-Bahn 1. Diese Darstellung wurde gewählt, um die Erläuterung zu vereinfachen. Tatsächlich wird das Segment im Anschluss an die bereits fertig gestellte Halbzeug-Bahn 1 abgelegt.

Wenn die Segmente 8 unmittelbar nach dem Ablegen miteinander verbunden werden, dann bildet die Halbzeugbahn 1 selbst die Fördereinrichtung, d.h. durch einen Zug auf die Halbzeugbahn 1 wird Raum für das nächste Segment 8 geschaffen.

Die Verbindung von benachbarten Segmenten 8 an ihren Längskanten 9, 10 kann auf unterschiedliche Weise erfolgen. Man kann die Längskanten 9, 10 beispielsweise Stoß an Stoß legen und miteinander durch Wärmezufuhr oder Ultraschall verschweißen. Man kann auch ein die Längskanten 9, 10 überlappendes Band verwenden, das aus dem gleichen Material wie das Matrixmaterial der Vorratsbahn 4 gebildet ist, und dieses Band dann mit den Segmenten 8 verschweißen oder verkleben. Man kann auch ein Klebeband verwenden oder die Stoß an Stoß liegenden Längskanten 9, 10 direkt miteinander verkleben. Hierzu kann man beispielsweise einen Heißkleber verwenden. Man kann benachbarte Segmente 8 auch im Bereich ihrer Längskanten einander überlappen lassen und dann miteinander verschmelzen. Zur Wärmezufuhr sind gängige Quellen, wie Laser, Heißluft oder Infrarotstrahlung möglich.

Schematisch dargestellt ist eine Verbindungseinrichtung 13, die in Richtung eines Doppelpfeils 14 über die Halbzeug-Bahn 1 geführt werden kann, also über die beiden Längskanten 9, 10 von benachbarten Segmenten 8. Schematisch dargestellt ist ebenfalls eine Andruckeinrichtung 15, die in Richtung eines Doppelpfeils 16 über die Halbzeug-Bahn 1 geführt werden kann. Die Verbindungseinrichtung 13 und die Andruckeinrichtung 15 können getrennt voneinander oder gemeinsam tätig werden. Im letzten Fall können sie auch als gemeinsame Baugruppe ausgebildet sein.

Die Verbindungseinrichtung 13 kann während des Verbindens von benachbarten Segmenten 8 in Längsrichtung 2 verlagert werden, wenn die Transporteinrichtung kontinuierlich bewegt wird, um die Halbzeug-Bahn 1 kontinuierlich zu fördern. Die Verbindungseinrichtung 13 (Gleiches gilt natürlich auch für die Andruckeinrichtung 15) kann aber auch in Längsrichtung 2 stationär gehalten werden, wenn die Fördereinrichtung taktweise betätigt wird.

Die Erzeugung einer anderen Halbzeug-Bahn, bei der der Winkel a eine andere Größe hat, ist relativ einfach dadurch möglich, dass man die Beziehung zwischen der Hauptrichtung 7 und der Längsrichtung 2 ändert. Hierfür ist es vielfach lediglich erforderlich, dass man die Richtung der Achse 17 der Vorratsrolle 5 verändert. In gleicher Weise müssen dann auch die Bewegungsrichtungen 14, 16 der Verbindungseinrichtung 13 und der Andruckeinrichtung 15 verändert werden. Die Position und Lage der Trenneinrichtung 11 kann hingegen unverändert belassen werden.

In nicht näher dargestellter Weise kann man eine Kupplungseinrichtung vorsehen, die die Winkelausrichtung der Vorratsrolle 5 auf die Verbindungseinrichtung 13 und die Andruckeinrichtung 15 überträgt, so dass die Verbindungseinrichtung 13 und die Andruckeinrichtung 15 entlang der Längskanten 9, 10 der Segmente 8 bewegt werden können, auch wenn sich der Winkel a ändert.

Die Halbzeug-Bahn 1 kann zu einer Wickelrolle 18 aufgewickelt werden, um ihre Handhabung zu vereinfachen.

Wenn man eine Halbzeugbahn 1 mit einem geänderten Winkel a erzeugen möchte, kann man alternativ oder zusätzlich zur Änderung der Richtung der Achse 17 der Vorratsrolle auch die Aufwickelrichtung verändern, die durch die Achse der Wickelrolle 18 definiert ist.

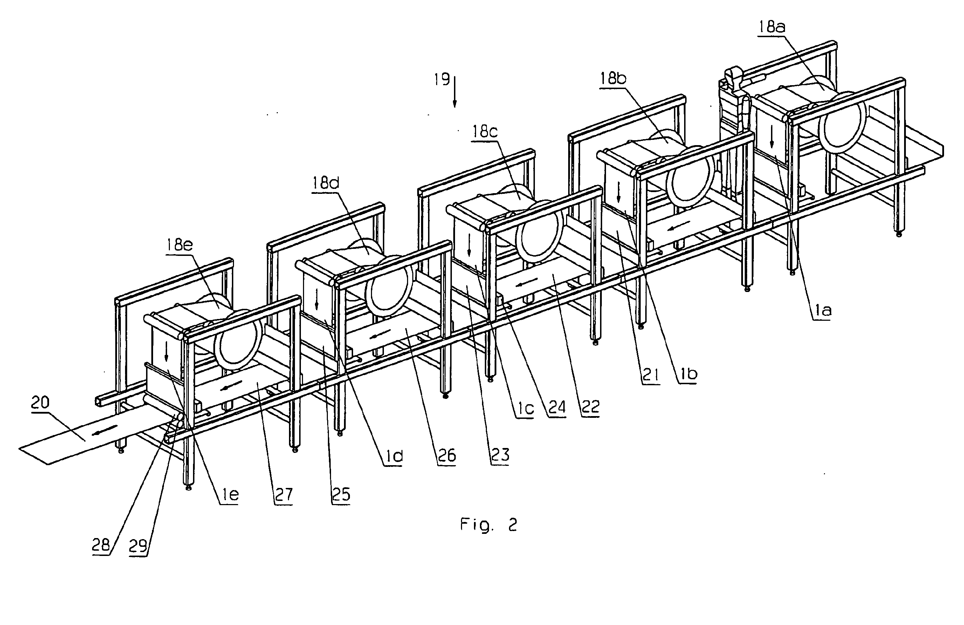

Fig. 2 zeigt in stark schematisierter Form eine Vorrichtung 19 zum Erzeugen eines Verbundwerkstoffs 20. Der Verbundwerkstoff 20 wird in diesem Fall gebildet durch fünf Halbzeug-Bahnen 1a-1e, die von fünf Wickelrollen 18a-18e abgewickelt werden. Eine abweichende Anzahl von Halbzeug-Bahnen ist natürlich möglich.

Die Wickelrollen 18a-18e haben parallel zueinander ausgerichtete Rotationsachsen, so dass die einzelnen Halbzeug-Bahnen la-le auch parallel zueinander zugeführt werden können.

Zunächst werden nur zwei Halbzeug-Bahnen 1a, 1b aufeinander gelegt und miteinander verbunden, beispielsweise verschweißt oder verklebt. Sobald die Verbindung erfolgt ist, wird die nächste Halbzeug-Bahn 1c aufgebracht und mit der darunter liegenden Halbzeug-Bahn 1b verbunden. Auf diesem Verbund aus drei Halbzeug-Bahnen 1a-1c wird dann die vierte Halbzeug-Bahn 1d aufgebracht und mit dem Stapel der darunter liegenden Halbzeug-Bahnen 1a-1c verbunden. Zum Schluss wird die fünfte Halbzeug-Bahn 1e aufgebracht und mit dem bereits fertig gestellten Stapel verbunden.

Das Verbinden kann beispielsweise dadurch erfolgen, dass vor dem Aufeinanderlegen der Halbzeug-Bahnen ein Klebstoff auf eine oder auf beide Halbzeug-Bahnen aufgetragen wird. Es ist auch möglich, eine oder beide Halbzeug-Bahnen an ihren Oberflächen durch Wärme oder chemische Mittel zu erweichen, so dass sie sich nach dem Aufeinanderlegen, gegebenenfalls durch Aufbringen von Druck, miteinander verbinden.

Man kann auch Wärme durch eine Halbzeug-Bahn hindurch leiten, nachdem sie zur Anlage an eine andere Halbzeug-Bahn gebracht worden ist, um ein Verschweißen zu bewirken. Diese Wärmebeaufschlagung sollte erfolgen, bevor eine weitere Halbzeug-Bahn aufgelegt wird, so dass die Wärme nur eine einzige Halbzeug-Bahn durchdringen muss.

Fig. 2 zeigt die verschiedenen Möglichkeiten, um aufeinander liegende Halbzeug-Bahnen miteinander zu verbinden. So ist in dem Modul, in dem die Vorratsrolle 18b gelagert ist, eine Klebstoffauftragseinrichtung 21 vorgesehen, mit der Klebstoff auf die Seite der Halbzeug-Bahn 1b aufgetragen wird, die zur Anlage an die Halbzeug-Bahn 1a gebracht wird.

Zusammengesetzt ergibt sich dann ein erstes Zwischenprodukt 22 des Verbundwerkstoffs 20, das aus zwei Halbzeug-Bahnen 18a, 18b zusammengesetzt ist.

Für die Halbzeug-Bahn 1c, die von der Vorratsrolle 18c abgewickelt wird, ist eine Heizeinrichtung 23 vorgesehen, die die Halbzeug-Bahn 1c auf der dem Zwischenprodukt 22 zugewandten Seite erwärmt und diese Seite soweit klebrig macht, dass sie an dem Zwischenprodukt 22, das aus den Halbzeug-Bahnen 1a, 1b gebildet ist, anhaftet. Zusätzlich kann eine weitere Heizeinrichtung 24 vorgesehen sein, die die der Halbzeug-Bahn 1c zugewandte Oberseite des Zwischenprodukts 22 erwärmt, um das Anhaften oder Verschwei-ßen der Halbzeug-Bahn 1c mit dem Zwischenprodukt 22 zu verbessern.

Für die Halbzeug-Bahn 1d ist eine Schweißvorrichtung 25 vorgesehen, mit der die zum Verschweißen notwendige Wärme in die Halbzeug-Bahn 1d eingetragen werden kann. Diese Wärme durchdringt diese Halbzeug-Bahn 1d und erhitzt sie so, dass sie mit einem Zwischenprodukt 26 verschweißt wird, das aus den Halbzeug-Bahnen 1a, 1b, 1c zusammengesetzt ist.

Das Zwischenprodukt 26 zusammen mit der Halbzeug-Bahn 1d bildet ein Zwischenprodukt 27, das gemeinsam mit der Halbzeug-Bahn 1d durch einen Nip geleitet wird, der zwischen zwei Druckwalzen 28, 29 ausgebildet ist. Der dort aufgebrachte Druck verbindet, gegebenenfalls nach Aufbringen eines Klebstoffs auf die Halbzeugbahn 1e oder eine entsprechende Vorbereitung, die Halbzeug-Bahn 1e mit dem Zwischenprodukt 27, um den Verbundwerkstoff 20 zu bilden.

Die einzelnen Verbindungsarten wurden hier lediglich beispielhaft aufgezählt. In vielen Fällen wird es zweckmäßig sein, alle Halbzeug-Bahnen 1a, 1b, 1c auf gleiche Weise miteinander zu verbinden. Wenn unterschiedliche Verbindungsarten gewählt werden, ist auch eine andere Reihenfolge der Verbindungsarten möglich.

Es müssen nicht fünf Halbzeug-Bahnen 1a-1e verwendet werden. Die konkrete Zahl der zu verwendenden Halbzeug-Bahnen 1a-1e richtet sich nach dem Verwendungszweck. Man verwendet aber mindestens zwei Halbzeug-Bahnen und ist bei der Anzahl nach oben hin praktisch nicht beschränkt. Es ist durchaus möglich, auch zehn oder mehr Halbzeug-Bahnen zum Verbundwerkstoff 20 miteinander zu verbinden.

Mindestens zwei der fünf Halbzeug-Bahnen 1a-1e weisen unterschiedliche Winkel a zwischen den unidirektional gerichteten Fasern 3 und der Längsrichtung 2 auf. In vielen Fällen wird es günstig sein, alle fünf Halbzeug-Bahnen 1a-1e mit unterschiedlichen Winkeln a der Fasern zu versehen.

Theoretisch können zwar alle Halbzeug-Bahnen 1a-1e den gleichen Winkel aufweisen. In der Regel wird man aber mindestens zwei unterschiedliche Winkelausrichtungen verwenden, je nach dem welche Anforderungen an das fertige Halbzeug 20 gestellt werden.

Die Vorrichtung 19 ist relativ einfach aufgebaut. Man kann im Prinzip mehrere gleichartige Module verwenden. Da diese Module hintereinander angeordnet sein können, ist relativ wenig Bauraum erforderlich.

Der Verbundwerkstoff 20 kann auch so hergestellt werden, dass man die Halbzeug-Bahnen 1a-1e von der Seite aus gesehen fächerförmig zusammenführt, wobei in den Zwischenräumen zwischen den einzelnen Halbzeug-Bahnen 1a, 1e Heizfelder vorgesehen sind, die beispielsweise durch Strahlungswärme oder Kontaktwärme die Oberflächen der Halbzeug-Bahnen 1a-1e erwärmen. Alternativ können natürlich auch Klebstoffauftragseinrichtungen in den Zwischenräumen vorgesehen sein. In beiden Fällen werden alle Halbzeug-Bahnen 1a-1e gleichzeitig aufeinander gepresst und somit verbunden, um den Verbundwerkstoff 20 zu bilden.

## Patentansprüche

1. Verfahren zum Erzeugen eines Verbundwerkstoffs, bei dem man mindestens zwei Halbzeug-Bahnen (1a-1e) von Rollen (18a-18e) abwickelt, deren Rotationsachse parallel zueinander ausgerichtet und die hintereinander oder übereinander angeordnet sind die Halbzeug-Bahnen (1a-1e), in ihrer Längsrichtung parallel zueinander zuführt, aufeinander legt und miteinander verbindet, wobei jede Halbzeug-Bahn (1a-1e) unidirektional gerichtet festgelegte Fasern in einer Kunststoffmatrix aufweist, bei mindestens einer Halbzeug-Bahn die Fasern einen vorbestimmten Winkel größer 0° mit der Längsrichtung der Halbzeug-Bahn einschließen und mindestens zwei der Halbzeug-Bahnen (1a-1e) unterschiedliche Winkel aufweisen.

2. Verfahren nach Anspruch 1, **dadurch gekennzeichnet, dass** man die Halbzeug-Bahnen (1a-1e) unter Temperatureinwirkung miteinander verbindet.

3. Verfahren nach Anspruch 1 oder 2, **dadurch gekennzeichnet, dass** man bei mehr als zwei Halbzeug-Bahnen (1a-1e) eine Verbindung zwischen zwei benachbarten Halbzeug-Bahnen (1a, 1b) vornimmt, bevor eine weitere Halbzeug-Bahn (1e) hinzugefügt wird.

4. Verfahren nach Anspruch 1 oder 2, **dadurch gekennzeichnet, dass** man mindestens drei Halbzeug-Bahnen (1a-1e) fächerartig zusammenführt und die Halbzeug-Bahnen (1a-1e) gleichzeitig miteinander verbindet.

5. Verfahren nach einem der Ansprüche 1 bis 4, **dadurch gekennzeichnet, dass** man benachbarte Halbzeug-Bahnen (1a-1e) stoffschlüssig miteinander verbindet.

6. Verfahren nach einem der Ansprüche 1 bis 5, **dadurch gekennzeichnet, dass** man die Halbzeug-Bahnen (1a-1e) unter Druckeinwirkung miteinander verbindet.

7. Vorrichtung zum Erzeugen eines Verbundwerkstoffs (20) mit mindestens zwei Ausgabeeinrichtungen, von denen jede eine HalbzeugBahn (1a-1e) entlang ihrer Längsrichtung und die Halbzeug-Bahnen (1a-1e) parallel zueinander ausgibt, wobei mindestens zwei Ausgabeeinrichtungen jeweils eine Vorratsrolle (18a-18e) parallel zueinander ausgerichtet und hintereinander oder übereinander angeordnet sind, einer Verbindungsvorrichtung zum Verbinden der HalbzeugBahnen und einer Ausgabe, wobei jede Halbzeug-Bahn (1a-1e) unidirektional gerichtet festgelegte Fasern in einer Kunststoffmatrix aufweist und bei mindestens einer Halbzeug-Bahn die Fasern einen vorbestimmten Winkel größer 0° mit der Längsrichtung der Halbzeug-Bahn (1a-1e) einschließen, wobei mindestens zwei der Halbzeug-Bahnen (1a-1e) unterschiedliche vorbestimmte Winkel aufweisen.

8. Vorrichtung nach Anspruch 7, **dadurch gekennzeichnet, dass** die Verbindungsvorrichtung eine Wärmequelle aufweist.

9. Vorrichtung nach Anspruch 7 oder 8, **dadurch gekennzeichnet, dass** die Verbindungsvorrichtung einen Spender für Klebstoff und/oder Lösemittel aufweist.

10. Vorrichtung nach einem der Ansprüche 7 bis 9, **dadurch gekennzeichnet, dass** eine Andruckeinrichtung (28, 29) vorgesehen ist, die mindestens zwei Halbzeug-Bahnen (1a-1e) zum Verbinden aufeinander presst.

11. Vorrichtung nach Anspruch 10, **dadurch gekennzeichnet, dass** die Andruckeinrichtung (28, 29) mindestens ein Rollenpaar aufweist.

## Claims

1. Method for producing a composite material in which at least two semi-finished webs (1a-1e) are unwound from rolls the rotational axis of which are aligned parallel to each other and which rolls are arranged one behind the other or one above the other, the semi-finished webs (1a-1e) are fed in their longitudinal direction parallel to each other, laid one above the other and are connected to each other, wherein each semi-finished web (1a-1e) has fibers fixed in a unidirectional oriented manner in a matrix of plastic, wherein in at least one of the semi-finished webs the fibers enclose a predetermined angle greater than 0° to the longitudinal direction of the semi-finished webs and at least two of the semi-finished webs (1a-1e) comprise different angles.

2. Method according to claim 1, **characterized in that** the semi-finished webs (1a-1e) are connected under temperature treatment.

3. Method according to claim 1 or 2, **characterized in that** in case of more than two semi-webs (1a-1e) a connection between two adjacent semi-finished webs (1a, 1b) is made before a further semiweb (1e) is added.

4. Method according to claim 1 or 2, **characterized in that** at least three semi-finished webs (1a, 1e) are combined in a fan-like manner and the semi-webs (1a-1e) are connected simultaneously to one another.

5. Method according to any of claims 1 to 4, **characterized in that** adjacent semi-finished webs (1 a-1 e) are connected by positive substance jointing.

6. Method according to any of claims 1 to 5, **characterized in that** the semi-finished webs (1 a-1 e) are connected to one another under action of pressure.

7. Device for producing a composite material (20) comprising at least two dispensing devices, each of which dispensing a semi-finished web (1 a-1 e) along its longitudinal direction and the semi-finished webs (1a-1e) parallel to each other, wherein in at least two dispensing devices the supply rolls (18a-18e) are aligned parallel to each other and arranged one behind the other or one above the other, a connecting device for connecting the semi-finished webs and an output, wherein each semi-finished web (1 a-1 e) comprises fibers fixed in unidirectionally orientated manner in a matrix of plastic and in at least one semi-finished web the fibers enclose a predetermined angle greater than 0° to the longitudinal direction of the semi-finished web (1a-1e), wherein at least two semi-finished webs (1a-1e) have different predetermined angles.

8. Device according to claim 7, **characterized in that** the connecting device comprises a heat source.

9. Device according to claim 7 or 8, **characterized in that** the connecting device comprises a dispenser for adhesive and/or solvent.

10. Device according to any of claims 7 to 9, **characterized in that** a pressure device (28, 29) is provided pressing at least two semi-webs (1a-1e) onto one another for connecting them.

11. Device according to claim 10, **characterized in that** the pressure device (28, 29) comprises at least one pair or rolls.

## Revendications

1. Procédé de production d'un matériau composite, selon lequel on déroule au moins deux bandes de produits semi-finis (1a-1e) à partir de rouleaux (18a-18e) dont les axes de rotation sont dirigés parallèlement les uns aux autres et qui sont agencés les uns derrière les autres ou les uns au-dessus des autres, on guide les bandes de produits semi-finis (1a-1e) parallèlement les unes aux autres dans le sens de la longueur, on les pose les unes sur les autres et on les assemble, chaque bande de produit semi-fini (1a-1e) comportant des fibres fixées dans une même direction dans une matrice plastique, les fibres d'au moins une bande de produit semi-fini formant un angle prédéterminé supérieur à 0° avec le sens de la longueur de la bande de produit semi-fini et au moins deux des bandes de produits semi-finis (1a-1e) ayant des angles différents.

2. Procédé selon la revendication 1, **caractérisé en ce que** l'on assemble les bandes de produits semi-finis (1a-1e) sous l'action d'une température.

3. Procédé selon la revendication 1 ou 2, **caractérisé en ce que**, en présence de plus de deux bandes de produits semi-finis (1a-1e), on effectue un assemblage entre deux bandes de produits semi-finis (1a-1b) voisines avant d'ajouter une autre bande de produit semi-fini (1e).

4. Procédé selon la revendication 1 ou 2, **caractérisé en ce que** l'on guide ensemble au moins trois bandes de produits semi-finis (1a-1e) à la manière d'un éventail et on assemble simultanément les bandes de produits semi-finis (1a-1e).

5. Procédé selon l'une des revendications 1 à 4, **caractérisé en ce que** l'on assemble par liaison de matière des bandes de produits semi-finis (1a-1e) voisines.

6. Procédé selon l'une des revendications 1 à 5, **caractérisé en ce que** l'on assemble les bandes de produits semi-finis (1a-1e) sous l'action d'une pression.

7. Dispositif de production d'un matériau composite (20) avec au moins deux dispositifs de sortie, chacun délivrant une bande de produit semi-fini (1a-1e) dans le sens de la longueur et les bandes de produits semi-finis (1a-1e) étant délivrées parallèlement les unes aux autres, au moins deux dispositifs de sortie comportant chacun un rouleau de réserve (18a-18e), les rouleaux de réserve étant agencés parallèlement les uns aux autres et les uns derrière les autres ou les uns au-dessus des autres, avec un dispositif d'assemblage pour assembler les bandes de produits semi-finis et avec une sortie, chaque bande de produit semi-fini (1a-1e) comportant des fibres fixées dans une même direction dans une matrice plastique et les fibres d'au moins une bande de produit semi-fini formant un angle prédéterminé supérieur à 0 ° avec le sens de la longueur de la bande de produit semi-fini (1a-1e), au moins deux des bandes de produits semi-finis (1a-1e) ayant des angles différents prédéterminés.

8. Dispositif selon la revendication 7, **caractérisé en ce que** le dispositif d'assemblage comporte une source de chaleur.

9. Dispositif selon la revendication 7 ou 8, **caractérisé en ce que** le dispositif d'assemblage comporte un distributeur de colle et/ou de solvant.

10. Dispositif selon l'une des revendications 7 à 9, **caractérisé en ce qu'**il est prévu un dispositif de pression (28, 29) qui presse l'une sur l'autre pour les assembler au moins deux bandes de produits semi-finis (1a-1e).

11. Dispositif selon la revendication 10, **caractérisé en ce que** le dispositif de pression (28, 29) comporte au moins une paire de rouleaux.
